# EUROPEAN PATENT SPECIFICATION

(11) **EP 1 785 065 B1**
(45) Date of publication and mention of the grant of the patent: **21.04.2010**
(21) Application number: 06123876.2
(22) Date of filing: 10.11.2006
(51) Int. Cl.: A47C 1/024, A47C 7/44, F16F 1/22

(54) **Chair structure for attaching spring**
Stuhlanordnung zum Anschliessen einer Feder
Structure de chaise pour raccorder un ressort

(30) Priority: 11.11.2005 JP 2005328180
(43) Date of publication of application: 16.05.2007
(73) Proprietor: Kokuyo Furniture Co., Ltd., Osaka 537-8686 (JP)
(72) Inventor: Ueda, Nobuyuki, Higashinari-ku Osaka-shi Nagano 537-8686 (JP); Horiki, Toshiyuki, Ina Nagano 399-4431 (JP)
(74) Representative: TBK-Patent

(56) References cited:
- GB-A- 610 741
- JP-A- 61 041 028
- US-A- 4 575 150
- US-A1- 4 090 700
- US-A1- 5 172 930

## Description

### BACKGROUND OF THE INVENTION

### 1. Field of the Invention

The present invention relates to a chair structure for attaching a spring which is entirely formed in a frame, having one end connected to a first attaching object and other end connected to a second attaching object, respectively.

### 2. Description of the Related Art

Conventionally, as a method to attach a spring which can accumulate reaction forces due to an elastic deformation so as to be able to adjust the reaction force, for example, an aspect of fixing one end of a compression coil spring and attaching other end of the compression coil spring in a longitudinal direction movably is considered (for example, please refer to a Japanese Patent Application Laid-Open No. 2003-265256 (particularly, refer to Fig. 11)).

Thus, there are various springs other than the compression coil spring and among them, there is a spring, which is formed in an elongated shape extending in a direction, is curved in a direction vertical to the longitudinal direction, and can accumulate the reaction forces. An object of the present invention is to provide means for adjusting the reaction force in such a spring.

Document GB 610 741 A discloses a chair, wherein the back-rest of a seat is pivoted at a connecting point on a fixed bracket and supported by a cranked leaf spring pivoted at a connecting point to the seat and at a connecting point to the rear of the back-rest.

### SUMMARY OF THE INVENTION

Namely, a chair structure for attaching spring according to the present invention is an attaching structure of spring as it is claimed in claim 1.

According to such a structure, when the elastic force acting from the spring on the attaching object is made smaller, for example, due to an aging phenomena of the spring, by changing the relative angle into the side where the reaction forces accumulated in the spring is made larger to keep the elastic force or by changing the relative angle when a user feels that the elastic force received by the backrest from the spring is too strong or too weak, it is possible to adjust the reaction forces accumulated in the spring, namely, the elastic force acting on the backrest.

As an aspect capable of specifically realizing such a structure, the constitution that the second attaching portion comprises a shaft member for pivotally fitting the spring to the second attaching object, and an adjusting member, which is disposed at a position displaced into the opposite side of the side directed from the shaft member to the first attaching object, for pressing the second attaching object or the spring may be available.

As a constitution capable of easily realizing the constitution described in the former clause, the constitution that the adjusting member is a male screw member, and an abutting position with the first attaching object, the second attaching object, or the spring is changed by screwing this male screw member backward and forward with respect to a female screw portion which is disposed penetrating through the first attaching object or the second attaching object may be considered. Employing such a constitution, since a head portion of the male screw which is the adjusting member is exposed on the surface of the opposite side of the second attaching object, it is possible to adjust the abutting position between the adjusting member and the second attaching object very easily.

As a constitution capable of easily obtaining the advantages as described above, the constitution that the first attaching object is an upper frame element to form an upper portion of a backrest of a chair, and the second attaching object is a lower frame element to form a lower portion of the backrest of the chair may be considered. According to such a constitution, it is possible to incline the upper frame element with respect to the lower frame element and acting the reaction force on the upper frame element in association with tilt, and further, the reaction force given by the frame-like spring can be adjusted.

As other constitution preferably capable of obtaining the above-described advantages, the constitution that the first attaching object is a base to support a seat of a chair and a backrest thereof, and the second attaching object is a back frame to form at least one portion of the backrest of the chair may be considered. According to such a constitution, acting the reaction force on the back frame in accordance with the rocking operation of the backrest, the rocking reaction force given by the frame-like spring can be further adjusted.

In addition, according to a constitution that the springs are arranged separated at a rear face of a backrest of a chair, and the spring has the same shape as a back frame, an upper frame element, or a lower frame element, it is possible to obtain the appearance such that the spring seems a portion of the backrest, and the appearance of the chair using such a spring can be arranged.

Employing the attaching structure of the spring according to the present invention, when the elastic force acting from the spring on the attaching object is made smaller, for example, due to the aging phenomena of the spring, by changing the relative angle into the side where the reaction forces accumulated in the spring is made larger to keep the elastic force or by changing the relative angle when a user feels that the elastic force received by the back from the spring is too strong or too weak, it is possible to adjust the reaction forces accumulated in the spring, namely, the elastic force acting on the backrest.

### BRIEF DESCRIPTION OF THE DRAWINGS

Fig. 1 is a perspective view showing a chair of an embodiment according to the present invention as seen from the front side thereof;
Fig. 2 is a perspective view showing the chair according to the embodiment as seen from the back side thereof;
Fig. 3 is a side view of the chair according to the embodiment;
Fig. 4 is a rear view of the chair according to the embodiment;
Fig. 5 is a plan view of the chair according to the embodiment;
Fig. 6 is a side view showing the synchronous rocking operation of the chair according to the embodiment;
Fig. 7 is a side view showing the state that an upper frame element on the chair according to the embodiment is displaced backward;
Fig. 8 is a perspective view showing the deformation operation of a backrest face of the chair according to the embodiment;
Fig. 9 is a plan view showing the deformation operation of a backrest face of the chair according to the embodiment;
Fig. 10 is a side view enlarging the substantial portions of the chair according to the embodiment;
Fig. 11 is an exploded perspective view of the substantial portions of the chair according to the embodiment;
Fig. 12 is a side view enlarging the substantial portions of the chair according to other embodiment of the present invention;
Fig. 13 is a side view of the chair according to other embodiment of the present invention;
Fig. 14 is a side view enlarging the substantial portions of the chair according to other embodiment of the present invention; and
Fig. 15 is a side view of the chair according to other embodiment of the present invention.

### DESCRIPTION OF THE PREFERRED EMBODIMENTS

An embodiment of the present invention will be described below with reference to the drawings.

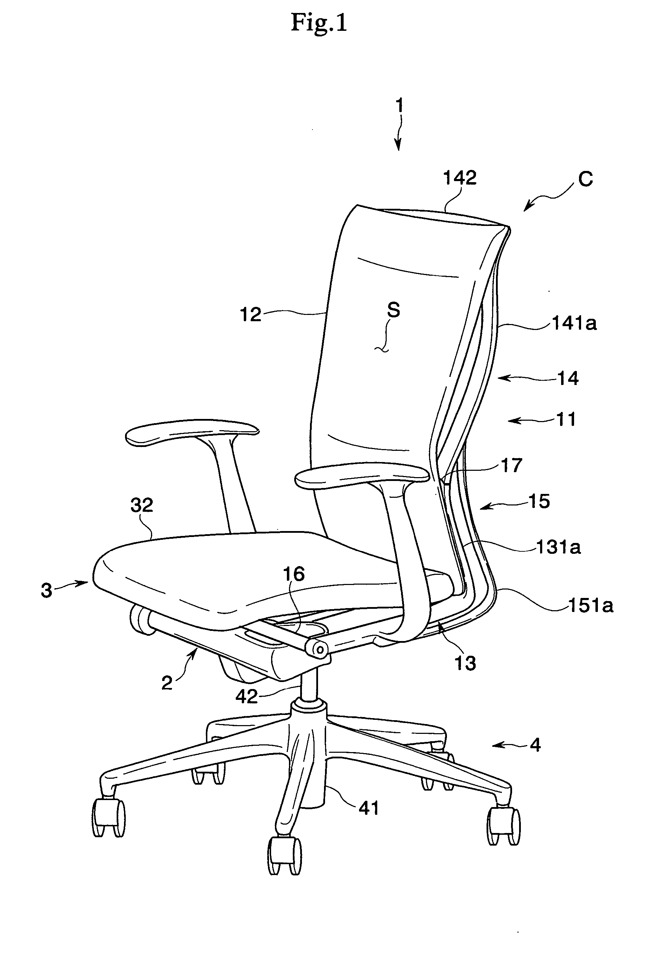

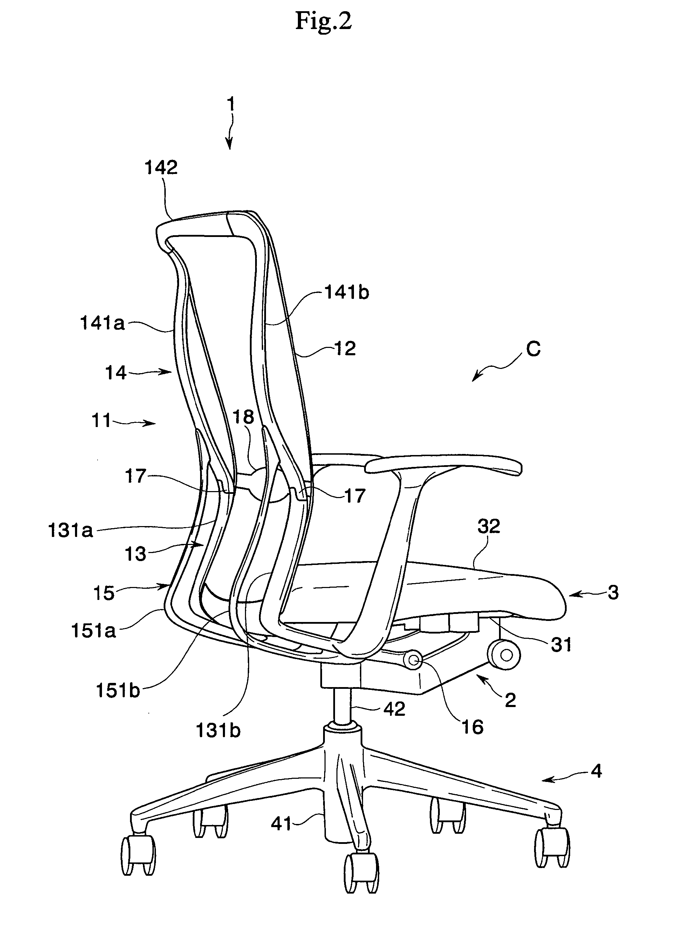

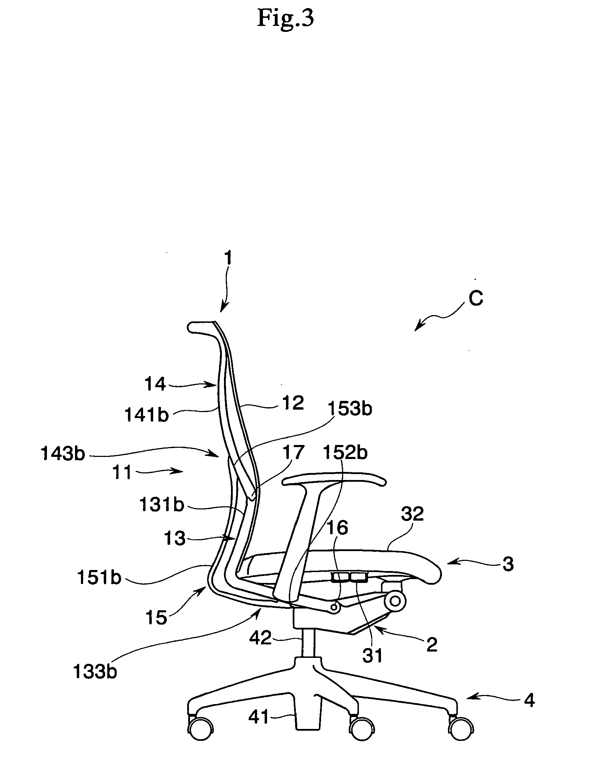

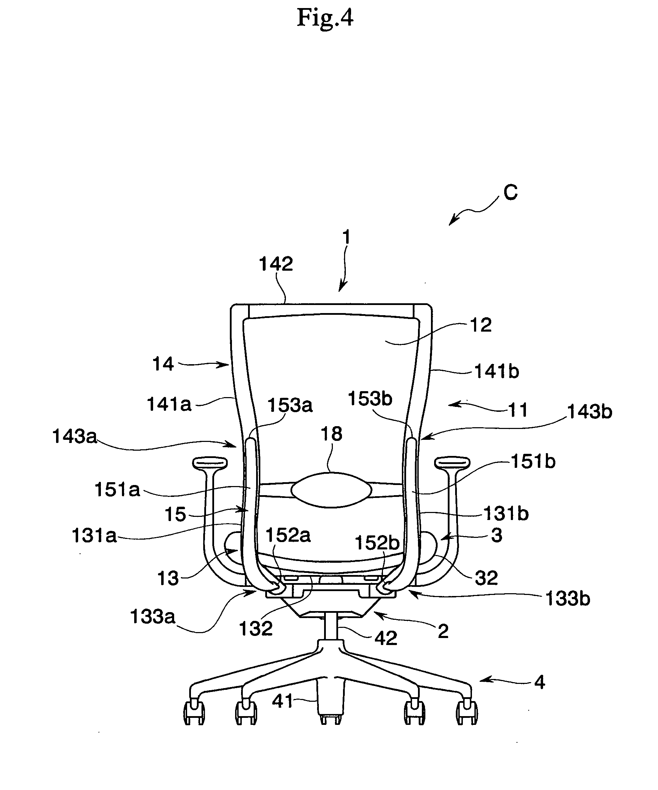

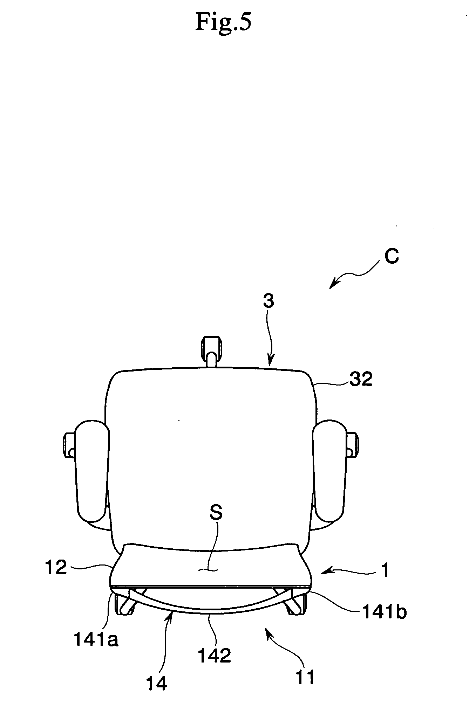

As shown in Figs. 1 to 5, the chair according to the present embodiment is provided with a leg 4, a base 2 supported by the leg 4, a seat 3 arranged on the base 2, and a backrest 1 pivotally fitted on the base 2 via a horizontal support shaft 16, and this chair can carry out the synchronous rocking operation that the seat 3 and the backrest 1 are inclined in conjunction with each other.

Describing in detail, leg 4 is provided with a leg wing 41 mounting a plurality of casters thereon and a leg support pillar 42 rising approximately vertically from the center of the leg wing 41 so as to be able to move up and down the leg support pillar 42 due to expansion and contraction of a gas spring (not illustrated) installed between the leg wing 41 and the leg support pillar 42.

The base 2 is fixed to the upper end of the leg support pillar 42, and it is possible to adjust the height positions of the seat 3 and the backrest 1 through the moving up and down operation of the leg support pillar 42. The base 2 incorporates an elastic urging mechanism (not illustrated) to urge the backrest 1 turning around the horizontal support shaft 16 forward and a fixing mechanism (not illustrated) to fix the rocking angle of the backrest 1 or the like. The elastic urging mechanism may elastically urge a back frame 11 by mounting a coil spring and a gas spring. It is assumed that the fixing mechanism may fix a rocking angle, for example, by selectively engaging a nail to any of plural steps of recesses disposed to the side of the back frame 11; however, in the case of using the gas spring in a push lock system for the elastic urging mechanism, an aspect to prohibit the expansion and contraction operation of the gas spring by driving a bulb of the gas spring may be possible.

The seat 3 is configured so as to hold a cushion body 32 constituting a seat face on a seat receiver 31. The cushion body 32 is made as a double layered structure superimposing a urethane cushion material on a double raschel mesh, for example, made of a synthetic fiber, the mesh at the lower layer secures an appropriate elasticity while absorbing the shock, and the urethane cushion material of the upper layer keeps a stability of a posture. The front end of the seat 3 is supported by the base 2 so as to slidably move in a back and front direction for the base 2, and the rear end of the seat 3 is attached to the lower frame portion 13 of the back frame 11 via a hinge (not illustrated).

The backrest 1 is made by attaching an upholstery member 12 configuring the backrest face S on the front face of the back frame 11. The back frame 11 is provided with the lower frame portion 13 which is turnably connected around the horizontal support shaft 16 with respect to the base 2, the upper frame portion 14 which is connected to the upper end of the lower frame portion 13 via the hinge 17, and the reaction force frame portion 15 which is a spring member formed in a frame shape to support this upper frame portion 14 from behind.

The lower frame portion 13 is made by mutually connecting the right and left upper elements 131a and 131b separately arranged in a width direction by a rigid lateral bridging material 132. The lower frame elements 131a, 131b, and the rigid lateral bridging material 132 are rigid bodies, for example, made of a metal. The lower frame elements 131a and 131b are elongated from the front end where the horizontal support shaft 16 is located to the rear portion and curved upward at the rear end to be made into approximately an L-shape as seen from the side.

The upper frame portion 14 is made by mutually connecting the right and left upper frame elements 141a and 141b separately arranged in a width direction by an elastic lateral bridging material 142. The upper frame elements 141a and 141b are rigid bodies, for example, made of a metal; however, the elastic lateral bridging material 142 is an elastic body, for example, made of a resin. The upper frame elements 141a and 141b are slowly curved from the lower end where the hinge 17 is located and is elongated upward while getting dented backward in some degree so as to be made into an arch swelled forward again in the vicinity of its upper end as seen from the side.

The reaction force frame portion 15 is made of reaction force frame elements 151a and 151b which are frame-like springs of the same number to support each of the upper frame elements 141a and 141b.

Thus, according to the present invention, the reaction force frame elements 151a and 151b have their one ends and other ends connected to the lower frame elements 131a and 131b which are the first members, and the upper frame elements 141a and 141b which are the second members, respectively. The reaction force frame elements 151a and 151b can accumulate the reaction forces due to the elastic deformation, and these reaction force frame elements 151a and 151b are formed in a frame shape which is elongated along the upper frame elements 141a and 141b and the lower frame elements 131a and 131b.

Specifically, lower ends 152a and 152b, which are one ends of the reaction force frame elements 151a and 151b, are linked with the downward faces of the lower attaching portions 133a and 133b, respectively; and upper ends 153a and 153b are linked with the rear faces of the upper frame elements 141a and 141b, respectively. However, other ends of the reaction force frame elements 151a and 151b are not prevented from being fixed on the seat 3 and the base 2 supporting the backrest 1. It is assumed that the reaction force frame elements 151a and 151b are made of an elastic body made of a resin of the same quality, for example, as the elastic lateral bridging material 132. According to the present embodiment, the reaction force frame elements 151a and 151b are frame-like springs made of a resin, which are elongated along the lower frame elements 131a and 131b and the upper frame elements 141a and 141b so as to be made into approximately a L-shape as seen from the side. These reaction force frame elements 151a and 151b are molded in such a manner that the width measurements are the same or slightly smaller than those of the frame elements 131a, 131b, 141a, and 141b and the back and forth or the upper and lower thicknesses thereof are thinner than those of the frame elements 131a, 131b, 141a, and 141b (in addition, they are becoming gradually thinner as being far from the end to be connected to the frame elements 131a, 131b, 141a, and 141b). Thereby, the appearance such that the reaction force frame elements 151a and 151b seem a portion of the back frame 11 branched from the frame elements 131a, 131b, 141a, and 141b is formed.

In the periphery of the hinge 17 to pivotally fit the lower frame elements 131a and 131b and the upper frame elements 141a and 141b with each other, specifically, from the rear ends of the lower frame elements 131a and 131b to the vicinity of the upper ends thereof and in the range in the vicinity of the lower ends of the upper frame elements 141a and 141b, a curved shape that the front face of the frame is swelled forward as seen from the side is formed. As described above, also in the vicinity of the upper ends of the upper frame elements 141a and 141b, a curved shape that the front face of the frame is swelled forward as seen from the side is formed. Thus, the upholstery member 12 is tensed so as to be bridged to the above-described region formed in the curved shape of the lower frame elements 131a and 131b and the upper frame elements 141a and 141b.

The upholstery member 12 is mainly made by a stretch upholstery fabric. The upholstery fabric is made by weaving an elastic thread such as an elastomer thread or the like in a double raschel mesh, for example, of a synthetic resin and this upholstery fabric has both of strength and a cushion capability. The upholstery fabric has different appearances (color, pattern, and brilliance or the like). The upper side and right and left sides of the upholstery fabric are kept by a backup material (not illustrated) formed in a three-way frame or a four-way frame as seen from the front. The backup material is a thin plate made of, for example, a resin, and particularly, this backup material prevents the right and left sides of the upholstery fabric from being flexed inside to keep the upholstery fabric into the tensed state. The upper end of the upholstery member 12 is installed in the right and left upper frame elements 141a and 141b to be supported, and the lower ends are installed in the right and left lower frame elements 131a and 131b to be supported. In this case, the backup material practices the action of a plate spring and presses the upholstery fabric to be evaginated.

Further, it is also possible to bridge a lumber support belt 18 at the height position corresponding to the waist portion of a person who is seated on the chair at the back of the upholstery member 12. Even when the person who is seated on the chair leans against the backrest face S, the region where the lumber support belt 18 is bridged does not sink backward more than a depth corresponding to the length of the lumber support belt 18.

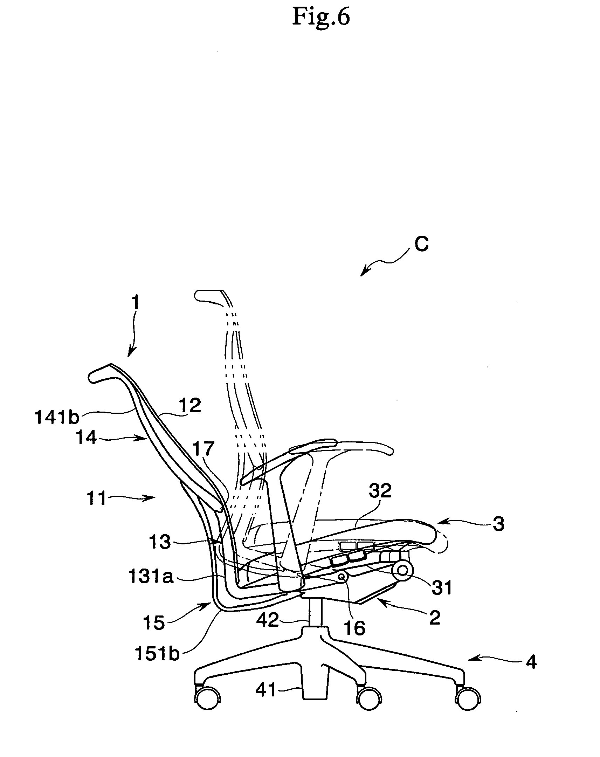

The chair according to the present embodiment can perform the synchronous rocking operation that the seat 3 and the backrest 1 are inclined in conjunction with each other. As shown in Fig. 6, according to the synchronous rocking operation, the backrest 1 is inclined backward and forward by entirely turning the back frame 11 around the horizontal support shaft 16. At the same time, the rear end of the seat 3 is swung upward and downward in conjunction with the back frame 11 and the front end of the seat 3 is slid backward and forward.

On that basis, in the chair according to the present embodiment, the operation is possible to displace only the left half of the upper portion of the backrest face S backward or only the right half thereof backward following the movement that the person who is seated on the chair turns his or her head to look back in the seat, extends his or her arm, and twists his or her body. In the upper frame portion 14 supporting the upper portion of the backrest face S moves backward and forward, the upper frame elements 141a and 141b move independently each other, which are paired in right and left. In other words, the upper frame element 141a at the left side is connected to the lower frame element 131a at the left side via the hinge 17, and the upper frame element 141b at the right side is connected to the lower frame element 131b at the right side via the hinge 17. These upper frame elements 141a and 141b can turn individually.

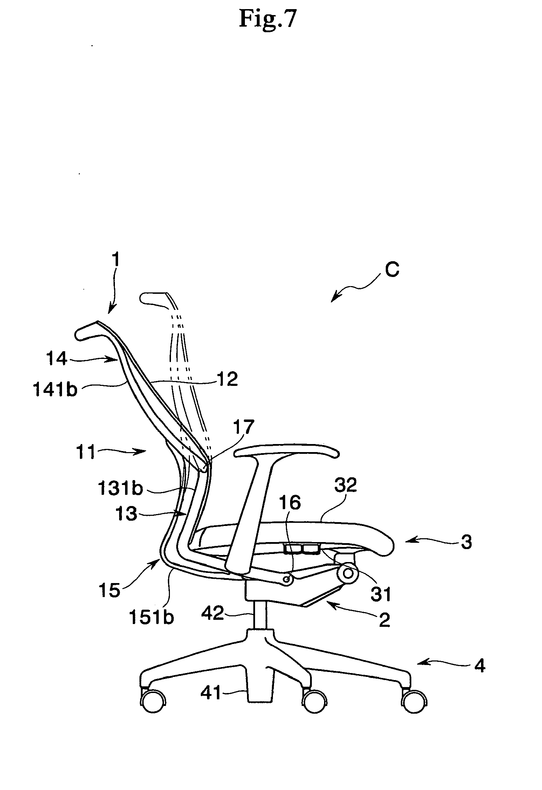

As shown in Fig. 7, when the upper frame elements 141a and 141b are inclined backward around the hinge 17, the area where the upholstery member 12 contacts the region formed in the curved shapes of the lower frame elements 131a and 131b and the upper frame elements 141a and 141b gradually increased, and further, the upholstery fabric extends upward and downward while increasing a tension. In addition, the reaction force frame elements 151a and 151b are deformed to extend angles and accumulate the reaction forces therein. Then, the reaction force frame elements 151a and 151b elastically urge the upper elements 141a and 141b to the original positions, namely, forward.

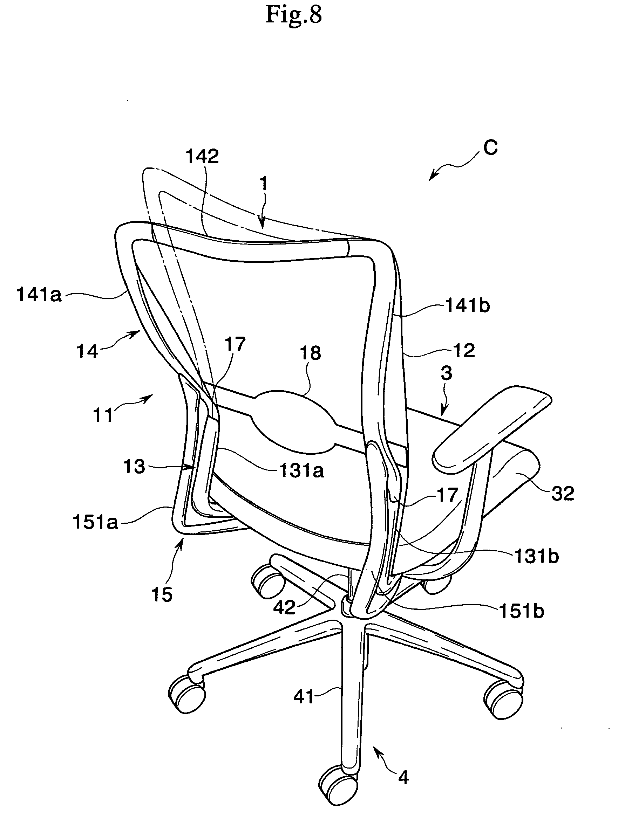

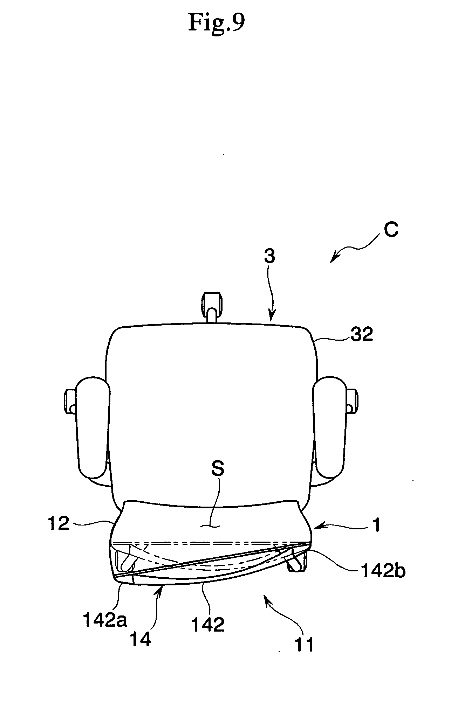

Then, if any one of the upper frame elements 141a and 141b relatively displaced in a back and front direction for other one of the upper frame elements 141a and 141b, as shown in Fig. 8 and Fig. 9, it is possible to change the shape of the backrest face S three-dimensionally. In this operation, the lower frame portion 13 is not necessarily driven. In addition, since the lower frame elements 131a and 131b to be paired left and right are rigidly connected via the rigid lateral bridging material 132, these lower frame elements 131a and 131b constantly make a movement in a unified manner. Therefore, the lower portion of the backrest face S, namely, the portion backward from the waist portion of the person who is seated on the chair constantly keeps a predetermined shape.

If one of the upper frame elements 141a and 141b relatively moves backward and forward to other one of them in accordance with the movement of the person who is seated on the chair, a distance between right and left upper frame elements 141a and 141b increased. In this case, in order to correspond to increase of the distance between these frame elements 141a and 141b, the elastic lateral bridging material 142 is elastically deformed. The elastic lateral bridging material 142 of the present embodiment connects the upper ends of the frame elements 141a and 141b with each other to be assembled to make the curved shape getting dented backward as seen from the flat face. The back and front thickness of the elastic lateral bridging material 142 is gradually thinner toward the center in the width direction thereof from the opposite ends thereof connected to the upper frame elements 141a and 141b, so that the center portion is comparatively deformable than the opposite ends. This structure serves to prevent the load from getting centered on the place where the upper frame elements 141a and 141b are connected to the elastic lateral bridging material 142. When one of the upper frame elements 141a and 141b relatively moved backward and forward against other one of them, the elastic lateral bridging material 142 is deformed so as to decrease a curvature factor and extends the distance between the opposite ends.

In addition, the load of the person who is seated on the chair given to the backrest S may act on the upper frame elements 141a and 141b via the upholstery member 12 and may give the load on the hinge 17 so as to incline the upper frame elements 141a and 141b inward. In order to reduce such a load, the elastic lateral bridging material 142 is assembled so that it exercises the initial elasticity so as to separate the upper frame elements 141a and 141b in a width direction.

It is also possible to incline both of the upper frame elements 141a and 141b via the upholstery member 12. In this case, for example, stretch to largely through his or her back becomes possible.

Thus, the present embodiment may provide a structure for attaching spring having one end connected to a first attaching object and other end connected to a second attaching object, respectively, and arranged these attaching objects in parallel, wherein one end is attached to the first attaching object via a first attaching portion and other end is attached to the second attaching object via a second attaching portion; and at least one of the first attaching portion and the second attaching portion is formed so as to be able to change a relative angle between the spring and the attaching faces of the first attaching object or the second attaching object.

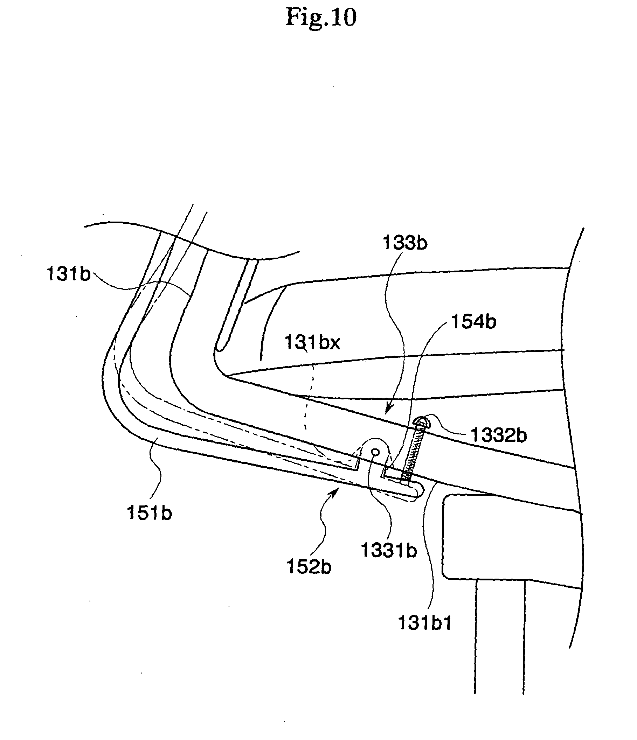

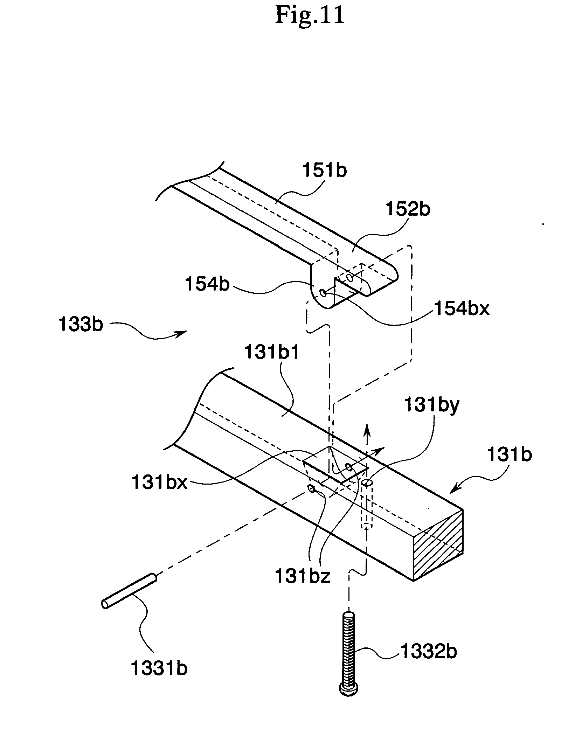

Specifically, as shown in Figs. 1 to 9, and as shown in Fig. 10 which is a side view enlarging the substantial portions and Fig. 11 which is the exploded perspective view of the substantial portions, respectively, the first attaching objects are the upper frame elements 141a and 141b, the second attaching objects are the lower frame elements 131a and 131b, and the springs are the reaction force frame elements 151a and 151b. In addition, the first attaching portions are the upper attaching portions 143a and 143b, and the second attaching portions are the lower attaching portions 133a and 133b, respectively. Then, these lower attaching portions 133a and 133b are provided with shaft members 1331a and 1331b for pivotally fitting the reaction force frame elements 151a and 151b and the lower frame elements 131a and 131b, and adjusting members 1332a and 1332b disposed at a position displaced into the opposite side of the side directed from the shaft members 1331a and 1331b to the upper frame elements 141a and 141b for pressing the reaction force frame elements 151a and 151b. In addition, the adjusting members 1332a and 1332b are male screw members according to the present embodiment, and by screwing backward and forward these adjusting members 1332a and 1332b with respect to female screw portions 131ay and 131by formed protruding through the lower frame elements 131a and 131b, the abutting positions with the reaction force frame elements 151a and 151b are changed. Further, the reaction force frame elements 151a and 151b are formed in the shapes similar to those of the upper frame elements 141a and 141b and the lower frame elements 131a and 131b to be arranged at the rear face side of the backrest 1, for more detail, they are arranged separated into the rear face sides of the upper elements 141a and 141b and the rear face sides of the lower frame elements 131a and 131b.

More specifically, the lower ends 152a and 152b of the reaction force frame elements 151a and 151b are provided with projections 154a and 154b projecting toward the lower frame elements 131a and 131b. On the other hand, on the attaching faces of the lower frame elements 131a and 131b, namely, on the downward faces 131a1 and 131b1, attaching concave portions 131ax and 131bx capable of accommodating these projections 154a and 154b, respectively, are provided. Further, by inserting these shaft members 1331a and 1331b in shaft inserting holes 131az and 131bz formed on these lower frame elements and shaft inserting holes 154ax and 154bx formed on the reaction force frame elements with the these projections 154a and 154b accommodated in these attaching concave portions 131ax and 131bx, the reaction force frame elements 151a and 151b are pivotally fitted to the lower frame elements 131a and 131b, respectively.

On the other hand, the female screw portions 131ay and 131by are disposed at the opposite side of the upper frame elements 141a and 141b from the attaching concave portions 131ax and 131bx, namely, the position which is displaced to the lower front side.

In other words, in the chair C according to the present embodiment, if the adjusting members 1332a and 1332b are moved downward with respect to the female screw portions 131ay and 131by, the lower ends of these adjusting members 1332a and 1332b may press the lower ends of the reaction frame elements 151a and 151b. Then, the lower ends 152a and 152b of the reaction force frame elements 151a and 151b may turn around the shaft members 1331a and 1331b, and a relative angle between the reaction force frame elements 151a and 151b and the downward faces 131a1 and 131b1 of the lower frame elements 131a and 131b is changed. On the other hand, if the adjusting members 1332a and 1332b are moved upward, the reaction force frame elements 151a and 151b are elastically deformed, and the lower ends of the reaction force frame elements 151a and 151b move upward while keeping the state that they abut against the adjusting members 1332a and 1332b. Also in this case, the lower ends of the reaction force frame elements 151a and 151b may turn around the shaft members 1331a and 1331b, so that the relative angle between these reaction force frame elements 151a and 151b and the downward faces 131a1 and 131b1 of the lower frame elements 131a and 131b is changed. Accordingly, if these adjusting members 1332a and 1332b are screwed backward and forward with respect to the female screw portions 131ay and 131by formed on the lower frame element 131a and 131b penetrating therethrough, the postures of the reaction force frame elements 151a and 151b are changed, and this makes it possible to change the reaction forces to be accumulated in these reaction force frame elements 151a and 151b.

As described above, according to the present embodiment, it is possible to realize the following effect since the lower attaching portions 133a and 133b as the second attaching portion are configured so as to be capable of changing the relative angle between the reaction force frame elements 151a and 151b as the spring and the downward faces 131a1 and 131b1 as the attaching faces of the lower frame elements 131a and 131b as the second attaching object. In other words, when the elastic force acting on the upper frame elements 141a and 141b is made smaller due to an aging phenomena of the reaction force frame elements 151a and 151b, by changing the relative angle between these reaction force frame elements 151a and 151b and the downward faces 131a1 and 131b1 into the side where the reaction forces accumulated in the reaction force frame elements 151a and 151b are made larger to keep the elastic force or by changing the relative angle when a user feels that the elastic force received by the backrest 1 from the reaction force frame elements 151a and 151b is too strong or too weak, it is possible to adjust the reaction forces accumulated in the reaction force frame elements 151a and 151b, namely, the elastic force acting on the backrest 1.

In addition, since the present embodiment employs the constitution such that the lower attaching portions 133a and 133b are provided with the shaft members 1331a and 1331b for pivotally fitting the reaction force frame elements 151a and 151b to the lower frame elements 131a and 131b and the adjusting members 1332a and 1332b provided at a position displaced into the opposite side from the side directed from the shaft members 1331a and 1331b toward the upper elements 141a and 141b for pressing the lower frame elements 131a and 131b, such a reaction adjusting mechanism can be realized with a simple structure.

Further, since the adjusting members 1332a and 1332b are male screw members, and these adjusting members 1332a and 1332b are screwed backward and forward with respect to the female screw portions 131ay and 131by formed on the lower frame element 131a and 131b penetrating therethrough so as to change the abutting position with the lower frame elements 131a and 131b, it is possible to easily realize the constitution described in the former clause. Further, the head portions of the male screw members as the adjusting members 1332a and 1332b are exposed to the surfaces at the opposite sides of the lower frame elements 131a and 131b, namely, on the upward face, and this makes it possible to adjust the abutting position between the adjusting members 1332a and 1332b and the lower frame elements 131a and 131b very easily.

Then, the reaction force frame elements 151a and 151b are arranged to be separated on the rear face of the backrest 1, and the reaction force frame elements 151a and 151b have the same shapes as those of the upper frame elements 141a and 141b, and the lower frame elements 131a and 131b, so that the appearance such that the reaction force frame elements 151a and 151b seem a portion of the backrest 1 can be formed so as to straighten the appearance of the chair C.

In addition, the present invention is not limited to the embodiments described above in detail.

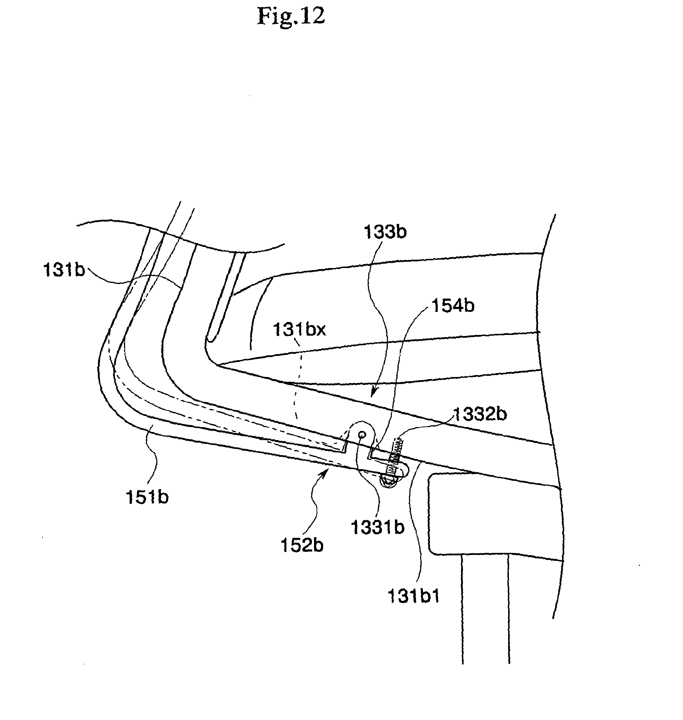

For example, as shown in Fig. 12 which is a side view enlarging the substantial portions, according to the above-described embodiments, the female screw holes 151ax and 151bx are disposed penetrating through the reaction frame elements 151a and 151b, and an aspect so as to abut the head portions of the adjusting members 1332a and 1332b as the male screw members against the lower face of these reaction frame elements 151a and 151b is also possible. According to this aspect, by elastically deforming the reaction force frame elements 151a and 151b while screwing the adjusting members 1332a and 1332b backward and forward with respect to these female screw holes 151ax and 151bx and maintaining the state of abutting the head portions of the adjusting members 1332a and 1332b against the lower faces of these reaction force frame elements 151a and 151b, the relative angle between the reaction force frame elements 151a and 151b and the downward faces 131a1 and 131b1 as the attaching faces of the lower frame element 131a and 131b is changed.

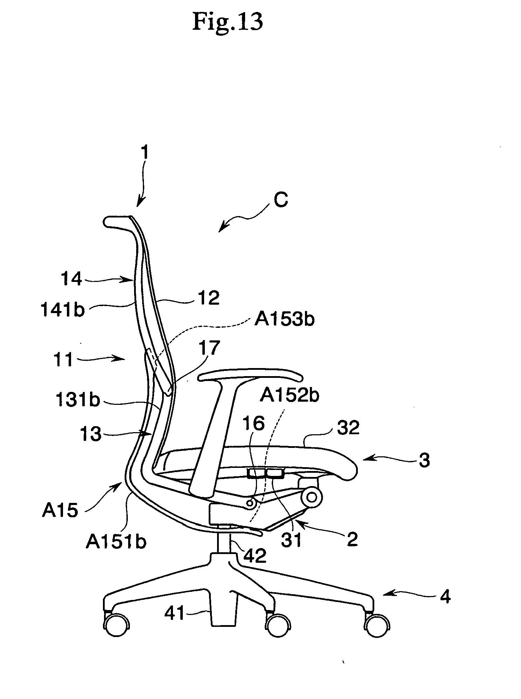

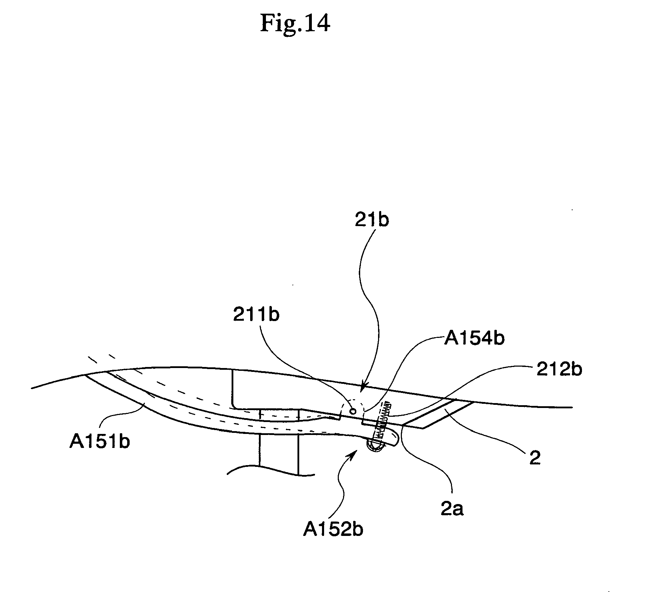

Further, as shown in Fig. 13 which is a side view, upper ends A152a and A152b as one ends of reaction force frame elements A151a and A151b formed in a frame shape and the lower ends as other ends are connected to the upper frame elements 141a and 141b as the first members and the base 2 as the second member, respectively, and as shown in Fig. 14, lower attaching portions 21a and 21b as the second attaching portions for connecting these reaction force frame elements A151a and A151b, and the base 2 may be configured in the same way as the second attaching portion in the above-described embodiment. In other words, pivotally fitting the lower ends of the reaction force frame elements A151a and A151b and the base 2 are via shaft members 211a and 211b and providing an adjusting member 212b at a region displaced from these shaft members 211a and 211b into the opposite sides of the upper frame elements 141a and 141b, the relative angle between the reaction force frame elements 151a and 151b and the downward face 2a as the attaching face of the base 2 may be changed.

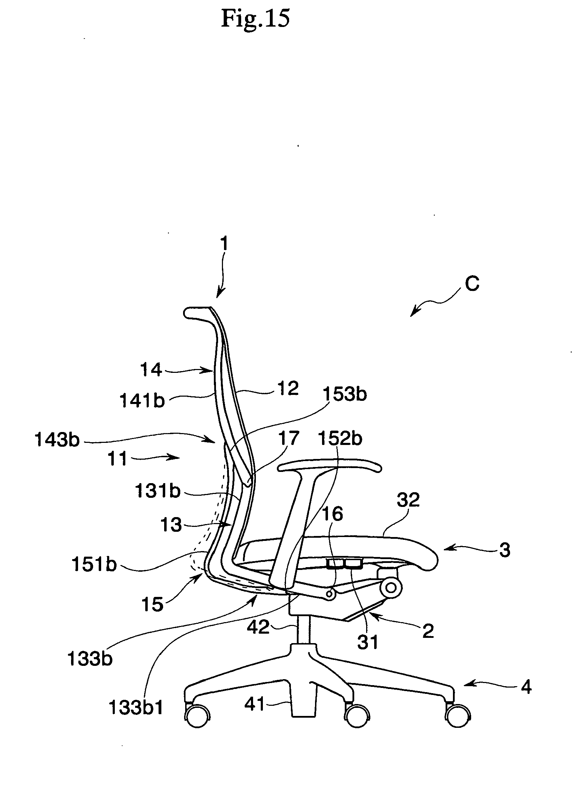

In addition, as shown in Fig. 15 which is a side view, the attaching position of the reaction force frame elements 151a and 151b as the spring for the lower frame elements 131a and 131b as the second members is configured so as to be capable of being changed between the position, for example, represented by a solid line in Fig. 15 and the position, for example, represented by an imaginary line, and the attaching position of the reaction force frame elements 151a and 151b for the upper frame elements 141a and 141b as the first member is set at only one place. By changing the attaching position for the lower frame elements 131a and 131b, the reaction force frame elements 151a and 151b are elastically deformed, and the relative angle between these reaction force frame elements 151a and 151b at the rising position and the downward faces 131a1 and 131b1 as the attaching faces of the lower frame elements 131a and 131b is changed so as to enable to change the reaction force given by these reaction force frame elements 151a and 151b. Such an aspect may be also possible.

Even if these aspects are employed, since the relative angle between the reaction frame element as the spring and the attaching face can be changed, the advantages according to the above-described embodiments can be completely obtained.

Then, the constitution such that, at the first attaching side not the second attaching side, in the above-described example, at the upper attaching portion not the side of the lower attaching portion, the relative angle between the above-described reaction frame element and the rear face as the attaching face of the upper frame element can be changed may be employed. Further, it is obvious that such a constitution may be used for the both of the lower attaching portion and the upper attaching portion.

In addition, the present invention may be used for not only the backrest of the chair but also for the general regions to attach one end to the first attaching object via the first attaching portion and attach other end to the second attaching object via the second attaching portion in a structure for attaching spring which is entirely formed in a frame, having one end connected to a first attaching object and other end connected to a second attaching object, respectively.

Other than this, various modifications are possible within the range without departing from the scope of the present invention.

In order to adjust a reaction force of a frame-like spring, the invention provides an attachment structure of a reaction force frame element, which is frame-like spring, having an upper end, which is one end, connected to an upper frame element, which is first attaching object, and a lower end, which is the other end, connected to a lower frame element, which is second attaching object, wherein the upper end is attached to the upper frame element through an upper attaching portion, which is first attaching portion, and the lower end is attached to the lower frame element through a lower attaching portion, which is second attaching portion, and, the lower attaching portion is configured to change a relative angle formed by the reaction force frame element and a downward face, which is attaching face, of the lower frame element.

## Claims

1. A chair structure for attaching a spring (151a, 151b) comprising:
a first attaching object (131a, 131b),
a second attaching object (141a, 141b) and
a spring (151a, 151b), having one end portion connected to the first attaching object (131a, 131b) and an other end portion connected to the second attaching object (141a, 141b), and being arranged to these attaching objects in parallel,
wherein one end portion is attached to the first attaching object (131a, 131b) via a first attaching portion and said other end portion is attached to the second attaching object (141a, 141b) via a second attaching portion; and
at least one of the first attaching portion and the second attaching portion is formed so as to be able to change a relative angle between the spring (151a, 151b) and the attaching faces of the first attaching object (131a, 131b) or the second attaching object (141a, 141b), wherein said at least one of the first or the second attaching portion comprises a shaft member (1331a, 1331b) for pivotally fitting the spring (151a, 151b) to the first respectively second attaching object, and an adjusting member (1332a, 1332b), which is disposed at a position displaced into the opposite side of the side directed from the shaft member (1331a, 1331b) to the second respectively first attaching object, for pressing the first respectively second attaching object or the spring (151a, 151b).

2. The structure for attaching spring according to claim 1,
wherein the adjusting member (1332a, 1332b) is a male screw member, and an abutting position with the first attaching object, the second attaching object, or the spring (151a, 151b) is changed by screwing this male screw member backward and forward with respect to a female screw portion which is disposed penetrating through the first attaching object or the second attaching object.

3. The structure for attaching spring according to claim 1 or 2,
wherein the first attaching object is an upper frame element (14) to form an upper portion of a backrest (1) of a chair, and the second attaching object is a lower frame element (13) to form a lower portion of the backrest (1) of the chair.

4. The structure for attaching spring according to claim 1 or 2,
wherein the first attaching object is a back frame (11) to form at least one portion of a backrest of a chair, and the second attaching object is a base (2) to support a seat (3) of the chair and the backrest thereof.

5. The structure for attaching spring according to claim 1 or 2,
wherein the springs (151a, 151b) are arranged separated at a rear face of a backrest of a chair, and the spring has the same shape as a back frame, an upper frame element (14), or a lower frame element (13).

## Patentansprüche

1. Stuhlaufbau zum Befestigen einer Feder (151a, 151b), mit:
einem ersten Befestigungsobjekt (131a, 131b),
einem zweiten Befestigungsobjekt (141a, 141b) und
einer Feder (151a, 151b), die einen Endabschnitt, der mit dem ersten Befestigungsobjekt (131a, 131b) verbunden ist, und einen anderen Endabschnitt aufweist, der mit dem zweiten Befestigungsobjekt (141a, 141b) verbunden ist, und parallel zu diesen Befestigungsobjekten angeordnet ist,
wobei ein Endabschnitt über einen ersten Befestigungsabschnitt an dem ersten Befestigungsobjekt (131a, 131b) befestigt ist und der andere Endabschnitt über einen zweiten Befestigungsabschnitt an dem zweiten Befestigungsobjekt (141a, 141b) befestigt ist; und
wenigstens einer von dem ersten Befestigungsabschnitt und dem zweiten Befestigungsabschnitt ausgebildet ist, um in der Lage zu sein, einen relativen Winkel zwischen der Feder (151a, 151b) und den Befestigungsflächen des ersten Befestigungsobjekts (131a, 131b) oder des zweiten Befestigungsobjekts (141a, 141b) zu ändern, wobei der wenigstens eine von dem ersten oder dem zweiten Befestigungsabschnitt ein Wellenbauteil (1331a, 1331b) zum schwenkbaren Anpassen der Feder (151a, 151b) an das erste beziehungsweise zweite Befestigungsobjekt und ein Einstellbauteil (1332a, 1332b) aufweist, das an einer Position angeordnet ist, die zu der entgegengesetzten Seite von der Seite hin versetzt ist, die von dem Wellenbauteil (1331a, 1331b) zu dem zweiten bzw. ersten Befestigungsobjekt hin gerichtet ist, um das erste beziehungsweise das zweite Befestigungsobjekt oder die Feder (151a, 151b) zu drücken.

2. Aufbau zum Befestigen einer Feder nach Anspruch 1, wobei das Einstellbauteil (1332a, 1332b) ein Schraubenbauteil ist und eine Anlageposition mit dem ersten Befestigungsobjekt, dem zweiten Befestigungsobjekt oder der Feder (151a, 151b) durch Schrauben dieses Schraubenbauteils rückwärts oder vorwärts hinsichtlich eines Mutternabschnitts eingestellt ist, welcher das erste Befestigungsobjekt oder das zweite Befestigungsobjekt durchdringend angeordnet ist.

3. Aufbau zum Befestigen einer Feder nach Anspruch 1 oder 2, wobei das erste Befestigungsobjekt ein oberes Rahmenelement (14) ist, um einen oberen Abschnitt einer Rückenlehne (1) eines Stuhls auszubilden, und das zweite Befestigungsobjekt ein unteres Rahmenelement (13) ist, um einen unteren Abschnitt der Rückenlehne (1) des Stuhls auszubilden.

4. Aufbau zum Befestigen einer Feder nach Anspruch 1 oder 2, wobei das erste Befestigungsobjekt ein hinterer Rahmen (11) ist, um wenigstens einen Abschnitt einer Rückenlehne eines Stuhls auszubilden, und das zweite Befestigungsobjekt eine Basis (2) ist, um einen Sitz (3) des Stuhls und dessen Rückenlehne zu stützen.

5. Aufbau zum Befestigen einer Feder nach Anspruch 1 oder 2, wobei die Federn (151a, 151b) getrennt an einer Rückenfläche einer Rückenlehne eines Stuhls angeordnet sind und die Feder dieselbe Form wie ein hinterer Rahmen, ein oberes Rahmenelement (14) oder ein unteres Rahmenelement (13) hat.

## Revendications

1. Structure de chaise pour fixer un ressort (151a, 151b) comprenant:
un premier objet de fixation (131a, 131b) et
un deuxième objet de fixation (141a, 1241b),
un ressort (151a, 151b) ayant une partie d'extrémité reliée au premier objet de fixation (131a, 131b) et une autre partie d'extrémité reliée au deuxième objet de fixation (141a, 141b), et étant agencé à ces objets de fixation en parallèle,
où une partie d'extrémité est fixée au premier objet de fixation (131a, 131b) à travers une première partie de fixation et ladite autre partie d'extrémité est fixée au deuxième objet de fixation (141a, 141b) à travers une deuxième partie de fixation; et
au moins l'une de la première partie de fixation et la deuxième partie de fixation est formée de manière à être capable de changer un angle relatif entre le ressort (151a, 151b) et les faces de fixation du premier objet de fixation (131a, 131b) ou du deuxième objet de fixation (141a, 141b), où ladite au moins l'une parmi la première ou la deuxième partie de fixation comprend un élément d'arbre (1331a, 1331b) pour ajuster le ressort (151a, 151b) en pivotement aux premier et deuxième objets de fixation respectivement, et un élément d'ajustement (1332a, 1332b) qui est disposé au niveau d'une position déplacée dans le côté opposé du côté dirigé à partir de l'élément d'arbre (1331a, 1331b) aux deuxième et premier objets de fixation respectivement, pour presser les premier et deuxième objets de fixation respectivement ou le ressort (151a, 151b).

2. Structure pour fixer un ressort selon la revendication 1,
dans laquelle l'élément d'ajustement (1332a, 1332b) est un élément vis mâle, et une position en butée avec le premier objet de fixation, le deuxième objet de fixation, ou le ressort (151a, 151b) est changée en vissant cet élément vis mâle en arrière et en avant par rapport à une partie de vis femelle qui est disposée en pénétrant à travers le premier objet de fixation ou le deuxième objet de fixation.

3. Structure pour fixer un ressort selon la revendication 1 ou 2,
dans laquelle le premier objet de fixation est un élément (14) de cadre supérieur pour former une partie supérieure d'un dossier (1) d'une chaise, et le deuxième objet de fixation est un élément (13) de cadre inférieur pour former une partie inférieure du dossier (1) de la chaise.

4. Structure pour fixer un ressort selon la revendication 1 ou 2,
dans laquelle le premier objet de fixation est un cadre arrière (11) pour former au moins une partie d'un dossier d'une chaise, et le deuxième objet de fixation est une base (2) pour soutenir un siège (3) de la chaise et le dossier de celle-ci.

5. Structure pour fixer un ressort selon la revendication 1 ou 2,
dans laquelle les ressorts (151a, 151b) sont agencés séparés au niveau d'une face arrière d'un dossier d'une chaise, et le ressort a la même forme qu'un cadre arrière, un élément (14) de cadre supérieur, ou un élément (13) de cadre inférieur.
